# EUROPÄISCHE PATENTSCHRIFT

(11) **EP 1 234 660 B1**
(45) Veröffentlichungstag und Bekanntmachung des Hinweises auf die Patenterteilung: **26.10.2005**
(21) Anmeldenummer: 02003130.8
(22) Anmeldetag: 14.02.2002
(51) Int. Cl.: B32B 27/40, B32B 31/00

(54) **Schichtstoff mit Dekor**
Decorated laminate material
Materiau stratifie pourvu d'une decoration

(30) Priorität: 20.02.2001 DE 10107860
(43) Veröffentlichungstag der Anmeldung: 28.08.2002
(73) Patentinhaber: Bayer MaterialScience AG, 51368 Leverkusen (DE); WOLFF WALSRODE AG, 29655 Walsrode (DE)
(72) Erfinder: Enewoldsen, Patric Dr., 40789 Monheim (DE); Lauter, Mathias, 41539 Dormagen (DE); Hättig, Jürgen, 41539 Dormagen (DE); Steenblock, Roland, 29614 Soltau (DE)

(56) Entgegenhaltungen:
- JP-A- 61 064 483
- US-A- 4 707 396
- US-A- 5 437 755
- US-A- 5 658 647
- US-A- 5 733 651

## Beschreibung

Die Erfindung betrifft einen Schichtstoff auf Basis bedruckter Folien aus transparentem thermoplastischem Polymeren und einem Grundkörper aus thermoplastischem Kunststoff, bei dem die Druckschicht zwischen dem Grundkörper und der Folie angeordnet ist.

Hinterspritzte Laminate mit Farbschicht sind bereits grundsätzlich bekannt (vergleiche z.B. DE 44 24 106 A1), ebenso hochtemperaturbeständige Druckfarben (DE 198 32 570 A1 und DE -44 21 561 A1 und Veröffentlichung der Fa. Pröll, Treuchtlinger Str. 29, 91781 Weißenburg vom November 1999 "Einführung in die IMD-Technologie"). Die Laminate nach DE 44 24 106 A1 haben jedoch entscheidende Nachteile, die in DE 44 24 106 A1 nicht erwähnt werden, noch werden dort Mittel und Maßnahmen zur Abhilfe angegeben. Die dort erwähnten einzusetzenden Folien sind nur in geringem Maße dehnbar und müssen in einem aufwendigen Zwischenschritt nach Vorwärmung durch Vakuum- oder Hochdruck-Kaltverformung tiefgezogen werden. Dieser Schritt führt zu einer unnötigen Belastung des thermoplastischen Kunststoffes und zur Verschlechterung der mechanischen Eigenschaften der Folie. Durch die Verwendung von Folien auf Polycarbonatbasis ist die Herstellung weicher, grifffreundlicher, hochabriebfester Teile nicht möglich. Weite Anwendungsbereiche dekorierter Schichtstoffe können nicht erschlossen werden. Die Polyurethanschichten müssen aus wässriger Dispersion oder aus organischen Lösungsmitteln aufgebracht werden, ein nach der vorliegenden Erfindung unnötiger Zwischenschritt, da eine als Haftvermittler dienende Zwischenschicht nicht benötigt wird. Die in DE 44 24 106 A1 erwähnten thermoplastischen Kunststoffschichten müssen bei hohen Temperaturen (> 260°C) aufgespritzt werden, was bei den Schichtstoffen nach dem Stand der Technik entweder die oben erwähnte Zwischenschicht nötig macht und ohne diese zu Auswaschungen und Verzerrungen der Farbschicht führt.

Daraus stellt sich die Aufgabe, die Herstellung von dekorierten Schichtstoffen wesentlich zu vereinfachen und weitere, bisher nicht zugängliche Anwendungsbereiche zu erschließen.

Die in DE 44 24 106 A1 beschriebenen Laminate weisen außerdem eine hohe Shore Härte auf.

Überraschenderweise wurde festgestellt, dass sich Schichtstoffe auf Basis von Folien aus thermoplastischen Polyurethanen mit besonders niedrigen Shore-Härten problemlos herstellen lassen.

Es wurde ferner gefunden, dass ein Vorformschritt (Tiefziehen) nicht nötig ist, da die Folie sich durch das außergewöhnlich hohe Dehnvermögen jeder gegebenen Geometrie beliebig anpasst.

Es wurde ferner gefunden, dass im Gegensatz zu der Veröffentlichung der Fa. Pröll die Druckfarbe auch auf thermoplastischen TPU-Folien haftet.

Gegenstand der Erfindung ist ein Schichtstoff auf Basis bedruckter Folien aus transparentem thermoplastischem Polyurethan mit einer Erweichungstemperatur (nach Kofler) von 140°C bis 180°C, vorzugsweise 155°C bis 170°C, einer Härte von 50 Shore A bis 95 Shore A, vorzugsweise von 65 Shore A bis 90 Shore A und einer Dicke von mindestens 0,025 mm, bevorzugt 0,05 bis 0,5 mm, besonders bevorzugt 0,08 bis 0,3 mm und einem Grundkörper aus thermoplastischem Kunststoff, bei dem die Druckschicht aus hochtemperaturbeständiger farbiger Tinte besteht und zwischen dem Grundkörper und der Polyurethanfolie angeordnet ist.

Besonders bevorzugt haben die Schichtstoffe eine Schichtdicke von 0,2 mm bis 20 mm, was zu weitgehender Gestaltungsfreiheit der Grundkörper führt.

Bevorzugt ist die Druckschicht aus hochtemperaturbeständiger farbiger Tinte, die z.B. aus der aus der Offenlegungsschrift DE 198 32 570 A1 bekannten Farbe, besteht.

Die Druckschicht weist besonders bevorzugt eine Schichtdicke von 3 bis 50 µm auf.

Besonders bevorzugt ist als Druckschicht eine Farbschicht, deren Erweichungstemperatur von 160°C bis 200°C beträgt.

Die hochtemperaturbeständige, flexible Druckfarbe zum Bedrucken von Kunststoffen besteht insbesondere aus Pigment, Bindemittel und gegebenenfalls üblichen Druckfarben - Hilfsstoffen, wobei der Bindemittelgehalt wenigstens 20 Gew.-% ausmacht, bezogen auf das Druckfarben-Gesamtgewicht und dieses Bindemittel seinerseits besteht aus 40 bis 90 Gew.-% erster Bindemittelkomponente und aus 60 bis 10 Gew.-% zweiter Bindemittelkomponente, je bezogen auf das Bindemittelgesamtgewicht, wobei die erste Bindemittelkomponente ausgewählt ist aus
- einem Homopolycarbonat auf der Basis 4,4'-Dihydroxydiphenyl-3,3,5-trimethylcyclohexan, das im wesentlichen entsprechend der Formel [C₂₂H₂₄O₃]ₙ aufgebaut ist und ein mittleres Molekulargewicht von 20.000 bis 40.000 aufweist
- und/oder aus einem Copolycarbonat auf der Basis von 4,4'-Dihydroxydiphenylisopropan und 4,4'-Dihydroxydiphenyl-3,3,5-trimethylcyclohexan, das im Wesentlichen nach der Formel [C₂₂H₂₄O₃]ₙ-[C₁₆H₁₄O₃]ₘ aufgebaut ist und das ein mittleres Molekulargewicht von 30 000 bis 50 000 aufweist, wobei
   - n: für mehr als 50 mol-% und weniger als 95 mol-% sowie
   - m: für mehr als 5 mol-% und weniger als 50 mol-% des Copolycarbonates steht,
dadurch gekennzeichnet, dass die zweite Bindemittelkomponente ein thermoplastisches, lineares, nicht-ionisches, aliphatisches oder cycloaliphatisches Polyesterpolyurethan ist, das durch Umsetzung aliphatischer oder cycloaliphatischer Diisocyanate mit einem, ein mittleres Molekulargewicht von 1 000 bis 5 000 aufweisenden aliphatischen Polyesterpolyol, gegebenenfalls in Anwesenheit eines Kettenverlängerungsmittels, bei Einhaltung eines NCO/OH-Äquivalentverhältnisses von 0,9:1,0 bis 1,0:1,1, gegebenenfalls in Gegenwart eines Katalysators, in einem organischen, keine aktiven Wasserstoffe aufweisenden Lösemittel erhältlich ist.

Der thermoplastische Kunststoff für den Grundkörper des Schichtstoffs ist insbesondere ausgewählt aus der Reihe: Polyamid, Polyester, Polyolefin, Styrolcopolymerisat, Polyphenylenoxid, Polycarbonat, Polyphenylensulfid, Polyvinylchlorid, Polyurethan, PSO oder PEEK oder möglichen Mischungen der Polymere.

Der Grundkörper kann auch insbesondere eine thermoplastische Kunststoffschicht mit einer Dicke von 0,1 mm bis 19 mm, die ihrerseits mehrlagig aufgebaut und/oder transparent ist.

Die bevorzugten TPU für die Folien haben im Temperaturbeständigkeitsbereich der Druckfarbe die geeignete Schmelzviskosität und können hinterspritzt werden, ohne die Druckfarbe auszuwaschen.

Durch die Härte der Folie bekommt der Schichtstoff die gewünschte angenehme Haptik.

Die bevorzugte Dicke der TPU Folie ermöglicht die notwenige rasche Wärmeabfuhr nach dem Aufspritzen des Grundkörpers. Die besonders bevorzugte Dicke ermöglicht die Verwendung auch höherschmelzender Thermoplaste.

In einer bevorzugten Ausführung des Schichtstoffs ist zwischen dem Grundkörper und der Druckschicht eine weitere Zwischenschicht aus thermoplastischem Kunststoff vorgesehen, der sich von dem Material des Grundkörpers unterscheidet und insbesondere ein thermoplastisches Polyurethan, bevorzugt ein transparentes thermoplastisches Polyurethan ist, die als Isolierschicht gegenüber Thermoplasten wirkt, deren Schmelzetemperatur über der Beständigkeitstemperatur der Druckfarbe liegt.

In einer besonderen Ausführung der Erfindung ist der thermoplastische Kunststoff des Grundkörpers ein transparenter Kunststoff.

In bestimmten Anwendungen ist es von besonderem Vorteil wenn der Schichtstoff so eingesetzt wird, dass der Grundkörper die Deckschicht zur Umgebung bildet. Der transparente Grundkörper eignet sich besonders für alle Sichtanwendungen (im Schuhbereich).

Thermoplastische Polyurethan-Elastomere (TPU) sind von technischer Bedeutung, da sie ausgezeichnete mechanische Eigenschaften zeigen und sich kostengünstig thermoplastisch verarbeiten lassen. Durch die Verwendung unterschiedlicher chemischer Aufbaukomponenten lassen sich ihre mechanischen Eigenschaften über einen großen Bereich variieren. Zusammenfassende Darstellungen von TPU, ihren Eigenschaften und Anwendungen finden sich in Kunststoffe 68 (1978), S. 819-825 und Kautschuk, Gummi, Kunststoffe 35 (1982), S. 568-584.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Die molaren Verhältnisse der Aufbaukomponenten können über einen breiten Bereich variiert werden, wodurch sich die Eigenschaften des Produkts einstellen lassen. Bewährt haben sich molare Verhältnisse von Polyolen zu Kettenverlängerern von 1:1 bis 1:12. Hierdurch ergeben sich Produkte im Bereich von 70 Shore A bis 75 Shore D. Der Aufbau der thermoplastisch verarbeitbaren Polyurethanelastomeren kann entweder schrittweise (Prepolymerverfahren) oder durch die gleichzeitige Reaktion aller Komponenten in einer Stufe erfolgen (one-shot-Verfahren). Beim Prepolymerverfahren wird aus dem Polyol und dem Diisocyanat ein isocyanathaltiges Prepolymer gebildet, das in einem zweiten Schritt mit dem Kettenverlängerer umgesetzt wird. Die TPU können kontinuierlich oder diskontinuierlich hergestellt werden. Die bekanntesten technischen Herstellverfahren sind das Bandverfahren und das Extruderverfahren.

Erfindungsgemäß verwendbare thermoplastisch verarbeitbare Polyurethane sind erhältlich durch Umsetzung der polyurethanbildenden Komponenten
A) organisches Diisocyanat,
B) lineares hydroxylterminiertes Polyol mit einem Molekulargewicht von 500 bis 5000,
C) Diol- oder Diamin-Kettenverlängerer mit einem Molekulargewicht von 60 bis 500,
wobei das Molverhältnis der NCO-Gruppen in A) zu den gegenüber Isocyanat reaktiven Gruppen in B) u. C) 0,9 bis 1,2 beträgt.

Als organische Diisocyanate A) kommen beispielsweise aliphatische, cycloaliphatische, araliphatische, heterocyclische und aromatische Diisocyanate in Betracht, wie sie in Justus Liebigs Annalen der Chemie, 562, S.75-136 beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4-cyclohexan-diisocyanat und 1-Methyl-2,6-cyclohexandiisocyanat sowie die entsprechenden Isomerengemische, 4,4'-Dicyclohexylmethandiisocyanat, 2,4'-Dicyclohexylmethan-diisocyanat und 2,2'-Dicyclohexylmethan-diisocyanat sowie die entsprechenden Isomerengemische, aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte flüssige 4,4'-Diphenylmethandiisocyanate und 2,4'-Diphenylmethandiisocyanate, 4,4'-Diisocyanatodiphenyl-ethan-(1,2) und 1,5-Naphthylendiisocyanat. Vorzugsweise verwendet werden 1,6-Hexamethylendiisocyanat, Isophorondiisocyanat, Dicyclohexylmethandiisocyanat, Diphenylmethandiisocyanat-Isomerengemische mit einem 4,4'-Diphenylmethandiisocyanatgehalt von >96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Gew.-% (berechnet auf die Gesamtmenge an Diisocyanat) eines Polyisocyanates verwendet werden, beispielsweise Triphenylmethan-4,4',4"-triisocyanat oder Polyphenylpolymethylen-polyisocyanaten.

Als Komponente B) werden lineare hydroxylterminierte Polyole mit einem Molekulargewicht von 500 bis 5000 eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise werden Ethylenoxid, Propylenoxid und Mischungen aus 1,2-Propylenoxid und Ethylenoxid eingesetzt. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin, und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyether-Diole sind ferner die hydroxylgruppenhaltigen Polymerisationsprodukte des Tetrahydrofurans. Es können auch trifünktionelle Polyether in Anteilen von 0 bis 30 Gew.-%, bezogen auf die bifunktionellen Polyether, eingesetzt werden, jedoch höchstens in solcher Menge, dass ein thermoplastisch verarbeitbares Produkt entsteht. Die im wesentlichen linearen Polyether-Diole besitzen Molekulargewichte von 500 bis 5000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoff-atomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bemsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von Hydroxycarbonsäuren, beispielsweise Hydroxycapronsäure und Polymerisationsprodukte von Lactonen, beispielsweise gegebenenfalls substituierten Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen Molekulargewichte von 500 bis 5000 und können einzeln oder in Form von Mischungen untereinander zur Anwendung kommen.

Als Kettenverlängerungsmittel C) werden Diole oder Diamine mit einem Molekulargewicht von 60 bis 500 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di(-hydroxyethyl)-hydrochinon, ethoxylierte Bisphenole, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und 3,5-Diethyl-2,6-toluylen-diamin und primäre mono-, di-, tri- oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen eingesetzt werden, z.B. als Kettenabbrecher oder Entformungshilfen. Beispielhaft genannt seien Alkohole wie Oktanol und Stearylalkohol oder Amine wie Butylamin und Stearylamin.

Zur Herstellung der TPU können die Aufbaukomponenten, gegebenenfalls in Gegenwart von Katalysatoren, Hilfsmitteln und Zusatzstoffen, in solchen Mengen zur Reaktion gebracht werden, dass das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,2:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylamino-ethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- oder Zinnverbindungen.

Neben den TPU-Komponenten und den Katalysatoren können auch andere Hilfsmittel und Zusatzstoffe zugesetzt werden. Genannt seien beispielsweise Gleitmittel wie Fettsäureester, deren Metallseifen, Fettsäureamide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische oder organische Füllstoffe und Verstärkungsmittel. Verstärkungsmittel sind insbesondere faserartige Verstärkungsstoffe wie anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur zu entnehmen, beispielsweise J.H. Saunders, K.C. Frisch: "High Polymers", Band XVI, Polyurethane, Teil 1 und 2, Interscience Publishers 1962 bzw. 1964, R. Gächter, H. Müller (Ed.): Taschenbuch der Kunststoff-Additive, 3.Ausgabe, Hanser Verlag, München 1989, oder DE-A 29 01 774.

Weitere Zusätze, die in das TPU eingearbeitet werden können, sind Thermoplaste, beispielsweise Polycarbonate und Acrylnitril-Butadien-Styrol-Terpolymerisate, insbesondere ABS. Ebenfalls können andere Elastomere wie Kautschuk, Ethylen-Vinylacetatcopolymerisate, Styrol-Butadiencopolymerisate sowie andere TPU verwendet werden. Weiterhin zur Einarbeitung geeignet sind handelsübliche Weichmacher wie Phosphate, Phthalate, Adipate, Sebacate und Alkylsulfonsäureester.

Die erfindungsgemäß verwendbaren TPU können kontinuierlich im sogenannten Extruderverfahren, z.B. in einem Mehrwellenextruder, hergestellt werden. Die Dosierung der TPU-Komponenten A), B) und C) kann gleichzeitig, d.h. im one-shot-Verfahren, oder nacheinander, d.h. nach einem Prepolymer-Verfahren, erfolgen. Dabei kann das Prepolymer sowohl batchweise vorgelegt, als auch kontinuierlich in einem Teil des Extruders oder in einem separaten vorgeschalteten Prepolymeraggregat hergestellt werden.

Die erfindungsgemäß einsetzbaren Folien können z.B. nach den aus den Schriften DE 25 17 033 A1 und DE 25 31 240 A1 bekannten Verfahren hergestellt werden.

Der Schichtstoff kann in den unterschiedlichsten technischen Gebieten Anwendung finden, in denen es gleichzeitig auf den Schutz eines gedruckten Dekors und auf die besondere Griffigkeit (Fachbegriff: Haptik) der Deckschicht ankommt.

Weiterer Gegenstand der Erfindung ist die Verwendung des erfindungsgemäßen Schichtstoffes zur Herstellung von Schuhen, insbesondere Sportschuhen, Uhrarmbändern, Gehäusen für elektrische Geräte, insbesondere Mobiltelefone, Haushaltsgeräte, Audio- und Videogeräten, von Spielzeug, Werkzeug und von Blenden, insbesondere Heizungs- und Lüfterblenden in Kraftfahrzeugen, sowie von Tierkennzeichnungsmarken.

### Beispiele

### Beispiel 1

Auf eine transparente Folie aus thermoplastischem Polyurethan von 0,15mm Dicke, einer Härte von 80 Shore A und einer Erweichungstemperatur (nach Kofler) von 170°C wurde im Siebdruckverfahren eine hochtemperaturbeständige Druckfarbe aufgebracht. Die Folie wurde mittels Vakuum in der Spritzgießform eingelegt, in der Weise, dass die Druckfarbe der Düse zugewendet ist. Die Spritzgießform wird auf 25 - 35°C temperiert. Das Temperiergerät muss eine Ableitung der Wärmeenergie der eingespritzten Schmelze aus thermoplastischem Polyurethan dergestalt ermöglichen, dass ein Temperaturgefälle von mindestens 170 K/min erreicht wird. Das thermoplastische Polyurethan wurde mit einer Massetemperatur von 226°C eingespritzt. Die Einspritzgeschwindigkeit beträgt 30mm/sec. Für diesen Versuch wird ein Angusssystem verwendet, bei dem der Anfangsdurchmesser des Angusskanals 2 mm Durchmesser hat. Der Durchmesser am Ende des konischen Angusskanals beträgt 4 mm. Die Probekörper werden mit einer Zykluszeit von 60 sec. hergestellt. Es werden erfindungsgemäße Schichtstoffe erhalten.

### Beispiel 2

Das Beispiel 1 wird wiederholt. Statt eines Polyurethans wird zum Hinterspritzen ein Acrylnitril-Butadien-Styrol Copolymerisat/Polycarbonat-Blend mit einer Massetemperatur von 260°C verwendet. Im Bereich des Angusses (= größtes Temperaturdelta) sind Auswaschungen aufgetreten.

### Beispiel 3

Das Beispiel 1 wird wiederholt. Statt eines Polyurethans wird zum Hinterspritzen ein Polycarbonat mit einer Massetemperatur von 290°C verwendet. Die bedruckte Folie wird stark ausgewaschen.

### Beispiel 4

Beispiel 2 wird wiederholt. Für diesen Versuch wird ein Angusssystem verwendet, bei dem der Anfangsdurchmesser des Angusskanals von 2 mm Durchmesser auf 3,5 mm Durchmesser vergrößert wird. Der Durchmesser am Ende des konischen Angusskanals wird von 4 mm Durchmesser auf 5,5 mm Durchmesser erhöht. Durch Verringerung der friktionsindizierten Temperaturerhöhung der Schmelze von 29°C auf ein Temperaturdelta von 12°C und der Verringerung der maximalen Scherbelastung von 11 000 1/s auf ca. 6 100 1/s gelingt die Erhaltung erfindungsgemäßer Schichtstoffe auch mit einem Thermoplasten, dessen Verarbeitungs-(= Schmelze-)temperatur über die Beständigkeitstemperatur der Druckfarbe liegt.

### Beispiel 5

Beispiel 3 wird wiederholt. Es kommt das in Beispiel 4 verwendete Angusssystem zur Anwendung. Gleichzeitig wird ein spezielles Polycarbonat ausgewählt (z.B. Makrolon 2405 der Bayer AG), dessen Verarbeitungstemperatur mit 270°C deutlich niedriger liegt, als die Verarbeitungstemperatur anderer Polycarbonate. Diese Kombination ermöglicht die Herstellung erfindungsgemäßer Schichtstoffe.

## Patentansprüche

1. Schichtstoff auf Basis bedruckter Folien aus transparentem thermoplastischem Polyurethan mit einer Erweichungstemperatur (nach Kofler) von 140°C bis 180°C, vorzugsweise 155°C bis 170°C, einer Härte von 50 Shore A bis 95 Shore A, vorzugsweise von 65 Shore A bis 90 Shore A und einer Dicke von mindestens 0,025 mm, bevorzugt 0,05 bis 0,5 mm, besonders bevorzugt 0,08 bis 0,3 mm und einem Grundkörper aus thermoplastischem Kunststoff, bei dem die Druckschicht aus hochtemperaturbeständiger farbiger Tinte besteht und zwischen dem Grundkörper und der Polyurethanfolie angeordnet ist.

2. Schichtstoff nach Anspruch 1, **dadurch gekennzeichnet, dass** der thermoplastische Kunststoff ausgewählt ist aus der Reihe: Polyamid, Polyester, Polyolefin, Styrolcopolymerisat, Polyphenylenoxid, Polycarbonat, Polyphenylensulfid, Polyvinylchlorid, Polyurethan, PSO oder PEEK oder möglichen Mischungen der Polymere.

3. Schichtstoff nach einem der Ansprüche 1 oder 2, **dadurch gekennzeichnet, dass** zwischen dem Grundkörper und der Druckschicht eine weitere Zwischenschicht aus thermoplastischem Kunststoff vorgesehen ist, der sich von dem Material des Grundkörpers unterscheidet und insbesondere ein thermoplastisches Polyurethan, bevorzugt ein transparentes thermoplastisches Polyurethan ist.

4. Schichtstoff nach einem der Ansprüche 1 bis 3, **dadurch gekennzeichnet, dass** die Druckschicht eine Schichtdicke von 3 bis 50 µm aufweist.

5. Schichtstoff nach einem der Ansprüche 1 bis 4, **dadurch gekennzeichnet, dass** der thermoplastische Kunststoff ein transparenter Kunststoff ist.

6. Schichtstoff nach einem der Ansprüche 1 bis 5, **dadurch gekennzeichnet, dass** der Grundkörper die Deckschicht zur Umgebung bildet.

7. Verwendung eines Schichtstoffes nach einem der Ansprüche 1 bis 6 zur Herstellung von Schuhen, insbesondere Sportschuhen, Uhrarmbändern, Gehäusen für elektrische Geräte, insbesondere Mobiltelefone, Haushaltsgeräte, Audio- und Videogeräten, von Spielzeug, Werkzeug und von Blenden, insbesondere Heizungs- und Lüfterblenden in Kraftfahrzeugen, sowie von Tierkennzeichnungsmarken.

## Claims

1. Laminate based on printed films of transparent thermoplastic polyurethane having a softening temperature (according to Kofter) of 140°C to 180°C, preferably 155°C to 170°C, a hardness of 50 Shore A to 95 Shore A, preferably 65 Shore A to 90 Shore A and a thickness of at least 0.025 mm, preferably 0.05 to 0.5 mm, particularly preferably 0.08 to 0.3 mm and a substrate of thermoplastic material, in which the printed layer comprises a high-temperature-resistant coloured ink and is arranged between the substrate and the polyurethane film.

2. Laminate according to claim 1, **characterised in that** the thermoplastic material is selected from the following: polyamide, polyester, polyolefin, styrene copolymer, polyphenylene oxide, polycarbonate, polyphenylene sulfide, polyvinyl chloride, polyurethane, PSO or PEEK, or possible mixtures of these polymers.

3. Laminate according to one of claims 1 and 2, **characterised in that** a further intermediate layer of thermoplastic material is provided between the substrate and the printed layer, which intermediate layer differs from the material of the substrate and is in particular a thermoplastic polyurethane, preferably a transparent thermoplastic polyurethane.

4. Laminate according to any one of claims 1 to 3, **characterised in that** the printed layer has a layer thickness of 3 to 50 µm.

5. Laminate according to any one of claims 1 to 4, **characterised in that** the thermoplastic material is a transparent plastic material.

6. Laminate according to any one of claims 1 to 5, **characterised in that** the substrate forms the cover layer in respect of the surroundings.

7. Use of a laminate according to any one of claims 1 to 6 for the production of shoes, in particular sports shoes, wristwatch straps, housings for electrical goods, in particular mobile phones, domestic appliances, audio and video equipment, toys, tools and screens, in particular heating and ventilation screens in vehicles, as well as animal identification markers.

## Revendications

1. Matériau stratifié à base de feuilles imprimées en polyuréthane thermoplastique transparent dont la température d'amollissement (selon Kofler) est comprise entre 140°C et 180°C et de préférence entre 155°C et 170°C, dont la dureté est comprise entre 50 Shore A à 95 Shore A et de préférence entre 65 Shore A et 90 Shore A et dont l'épaisseur est d'au moins 0,025 mm, de préférence de 0,05 à 0,5 mm et de façon particulièrement préférable de 0,08 à 0,3 mm, et d'un corps de base en matière synthétique thermoplastique, dans lequel la couche imprimée est constituée d'encres colorées qui résistent aux hautes températures et est disposée entre le corps de base et la feuille de polyuréthane.

2. Matériau stratifié selon la revendication 1, **caractérisé en ce que** la matière synthétique thermoplastique est sélectionnée dans la série des polyamides, des polyesters, des polyoléfines, des copolymères de styrène, des poly(oxyde de phénylène), des polycarbonates, des poly(sulfure de phénylène), des poly(chlorure de vinyle), des polyuréthanes, des PSO et des PEEK, et dans les mélanges possibles de ces polymères.

3. Matériau stratifié selon l'une des revendications 1 ou 2, **caractérisé en ce qu'**entre le corps de base et la couche imprimée est prévue une autre couche intermédiaire en matière synthétique thermoplastique qui est différente du matériau du corps de base et qui est en particulier un polyuréthane thermoplastique et de préférence un polyuréthane thermoplastique transparent.

4. Matériau stratifié selon l'une des revendications 1 à 3, **caractérisé en ce que** l'épaisseur de la couche imprimée est comprise entre 3 et 50 µm.

5. Matériau stratifié selon l'une des revendications 1 à 4, **caractérisé en ce que** la matière synthétique thermoplastique est une matière synthétique transparente.

6. Matériau stratifié selon l'une des revendications 1 à ou 5, **caractérisé en ce que** le corps de base forme la couche de recouvrement vis-à-vis de l'environnement.

7. Utilisation d'un matériau stratifié selon l'une des revendications 1 à 6 pour la fabrication de chaussures, en particulier de chaussures de sport, de bracelets de montre, de boîtiers pour appareils électriques, en particulier pour téléphones mobiles, d'appareils électroménagers, d'appareils audio et d'appareils vidéo, de jouets, d'outils et d'écrans, en particulier des écrans de chauffage et de ventilation dans des véhicules automobiles, ainsi que d'étiquettes d'identification d'animaux.
